# EUROPÄISCHE PATENTSCHRIFT

(11) **EP 1 794 091 B1**
(45) Veröffentlichungstag und Bekanntmachung des Hinweises auf die Patenterteilung: **20.02.2008**
(21) Anmeldenummer: 05784721.2
(22) Anmeldetag: 06.09.2005
(51) Int. Cl.: C02F 1/467

(54) **BESCHICHTUNGSANLAGE, UMFASSEND MINDESTENS EINE VORBEHANDLUNGSANLAGE**
COATING PLANT COMPRISING AT LEAST ONE PRE-TREATMENT UNIT
INSTALLATION D'ENDUCTION, COMPORTANT AU MOINS UNE INSTALLATION DE PRETRAITEMENT

(30) Priorität: 30.09.2004 DE 102004047532
(43) Veröffentlichungstag der Anmeldung: 13.06.2007
(73) Patentinhaber: BASF Coatings AG, 48165 Münster (DE)
(72) Erfinder: MÜLLER, Boris, 38350 Helmstedt (DE)
(74) Vertreter: Fischer, Jens-Dieter W.E.
(86) Internationale Anmeldenummer: PCT/EP2005/054512
(87) Internationale Veröffentlichungsnummer: WO 2006/034954

(56) Entgegenhaltungen:
- WO-A-02/26636
- WO-A-03/027029
- US-A- 5 453 301
- GÜHRING I K: "Mikrobieller Befall von Elektrotauchlack in der Automobilindustrie" [Online] 4. April 2000 (2000-04-04), UNIVERSITÄT STUTTGART , STUTTGART, DE , XP002359372 Gefunden im Internet: URL:http://opus.uni-stuttgart.de/opus/voll texte/2000/653/pdf/diss_guehring.pdf> [gefunden am 2005-12-15] das ganze Dokument
- PATENT ABSTRACTS OF JAPAN Bd. 2003, Nr. 02, 5. Februar 2003 (2003-02-05) & JP 2002 285363 A (NIPPON PAINT CO LTD; NIPPON PAINT PLANT ENGINEERING CO LTD), 3. Oktober 2002 (2002-10-03)

## Beschreibung

Die vorliegende Erfindung betrifft eine Beschichtungsanlage umfassend mindestens eine Vorrichtung zur Vorbehandlung der zu beschichtenden Substrate (Vorbehandlungsanlage), mindestens eine Vorrichtung zum Beschichten der Substrate mit Beschichtungsstoffen (Beschichtungsvorrichtung) und mindestens eine Vorrichtung zum Trocknen und Härten der applizierten Beschichtungsstoffe (Härtungsvorrichtung). Sie betrifft eine neue Beschichtungsanlage, insbesondere eine Lackieranlage, umfassend mindestens eine Vorbehandlungsanlage. Außerdem betrifft die vorliegende Erfindung ein neues Verfahren zur Entkeimung von Vorbehandlungsanlagen in Beschichtungsanlagen, insbesondere Lackieranlagen.

Eine Beschichtungsanlage, insbesondere eine Lackieranlage, umfasst üblicherweise mindestens drei Vorrichtungen, die der Durchführung der drei grundlegenden Prozessschritte der Beschichtungstechnologie
1. Vorbehandeln,
2. Lackieren und
3. Trocknen und Härten
dienen (vgl. hierzu beispielsweise A. Goldschmidt und H.-J Streitberger, BASF Handbuch Lackiertechnik, BASF Coatings AG, Vincentz Verlag, Hannover, 2002, »4.1.2.3 Vorbehandlungen«, Seiten 470 bis 481, i. V. m. »4. Lackiertechnologie«, Seite 453, Abb. 4.1 »Prozessschritte einer Lackieranlage«).

Dabei ist der Lackiererfolg in hohem Maße von der Güte der Vorbehandlung der zu lackierenden Substrate abhängig. Dies ist insbesondere bei der Lackierung hochwertiger Güter wie Automobile, insbesondere PKW der Oberklasse, mit Beschichtungen von besonders hoher Qualität der Fall. So können Schäden, die in der Vorbehandlung eintreten, durch die nachfolgende Lackierung - und sei sie auch völlig fehlerfrei - praktisch nicht mehr behoben werden, da beispielsweise Partikel, die bei der Vorbehandlung auf dem Substrat abgelagert werden, in den fertigen Beschichtungen deutlich sichtbar bleiben, was vom Kunden nicht akzeptiert wird. Die betreffenden Beschichtungen müssen dann aufwändig nachbehandelt oder reparaturlackiert werden, im schlimmsten Falle sogar vollflächig.

Bekanntermaßen werden die Vorbehandlungsanlagen von Lackieranlagen, die der Automobilserienlackierung dienen, insbesondere in den Aktivierungszonen und den Spülzonen, mit deionisiertem, d. h. vollentsalztem, Wasser (nachstehend »VEW« genannt) betrieben. Wegen Wassertemperaturen um 30 bis 45°C, langen Beckenstandzeiten und/oder Verschmutzungen durch Phosphate bieten die betreffenden Aufbereitungsanlagen, Vorratsbehälter und Leitungen für das VEW einen idealen Lebensraum für Mikroorganismen, die sich u. U. explosionsartig vermehren und verstärkt Biofilme bilden, die an die Innenwände der Vorbehandlungsanlagen aufwachsen (vgl, hierzu l.K. Gühring: "Mikrobieller Befall von Elektrotauchlack in der Automobilindustrie", Dissertation am Institut für Bioverfahrenstechnik der Universität Stuttgart, 2000). Diese Biofilme können sich dann in unvorhersehbarer Weise von den Wänden lösen, auf den Substraten niederschlagen und dadurch Beschichtungsfehler hervorrufen.

Die Biofilme erweisen sich häufig als ausgesprochen resistent gegenüber der chemischen Desinfizierung, die nur temporär wirkt und hohe Kosten verursacht. Denn ein Einsatz von Desinfektionsmitteln ist im Allgemeinen auf die Zeiten des Stillstands der Anlagen beschränkt, um erwünschte Wechselwirkungen mit Vorbehandlungschemikalien zu vermeiden. Außerdem muss verhindert werden, dass die verwendeten desinfizierenden Chemikalien in andere Anlagenteile, beispielsweise Elektrotauchlackbäder, eingeschleppt werden und dort die Beschichtungsstoffe in unerwünschter Weise verändern. Erschwerend kommt hinzu, dass Stoßdesinfektionen die Ablösung von Biofilmen verstärken können.

Die vollständige oder nahezu vollständige Verhinderung des Anwachsens von Biofilmen in den Vorbehandlungsanlagen durch die Entkeimung des VEW mit Hilfe von kurzwellig, germizider UV-Strahlung führt auch nicht zu dem gewünschten Erfolg, da die UV-Strahlung nur die Bereiche trifft, die dem direkten Strahlengang ausgesetzt sind. Schattenzonen, Rohrleitungen oder Bögen können nicht erreicht werden. Im Übrigen vermag die UV-Strahlung die Mikroorganismen lediglich zu deaktivieren, aber nicht die organischen Reste wie die Biofilme zu beseitigen. Diese verbleiben im VEW und dienen als zusätzliche Nahrungsquellen oder Anwachsstellen.

Aus der europäischen Patentanmeldung EP 0 994 074 A2 sind eine Anordnung und ein Verfahren zur anodischen Oxidation von wässrigen Lösungen bekannt, bei der Elektroden verwendet werden, die auf ihrer Oberfläche eine leitfähige Schicht aus dotiertem Diamant aufweisen und die in einem Potenzialbereich betrieben werden, bei dem noch keine Sauerstoffentwicklung an den Elektroden erfolgt, sondern hochreaktive Hydroxylradikale als Oxdidationsmittel gebildet werden.

Die Anordnung und das Verfahren sollen der Desinfektion von Trinkwasser oder der Erhaltung der Keimfreiheit in Leitungssystemen in größeren Komplexen wie Krankenhäuser, Hotels, Heimen und Schwimmbädern, der Abwasseraufbereitung in industriellen Anlagen bzw. der Behandlung von besonders schwer belasteten oder mit schwer zerstörbaren organischen Verbindungen belasteten Abwässern, der zuverlässigen Entkeimung von Klimaanlagen, der Reinigung von organischen Komponenten in Abwässern, beispielsweise zur Reinigung von Schmierstoffen aus Bearbeitungsbetrieben, allgemein von organischen Resten aus der chemischen, pharmazeutischen und kosmetische Industrie und von organischen Zusätzen in galvanischen Abfällen oder der Zerstörung von anorganischen Verbindungen wie Cyanid in Abwässern dienen. Es sollen außerdem Behandlungen von Bädern, die mit organischen Additiven arbeiten, beispielsweise zu Reinigungszwecken in der fertigungstechnischen Industrie, möglich werden. Sind die betreffenden Zusätze verbraucht, braucht das komplette Bad nicht mehr ausgewechselt zu werden, sondern die Additive bzw. ihre Reste können gezielt zerstört werden, wonach nur die Additive neu in der gewünschten Menge zugegeben werden müssen.

Der europäischen Patentanmeldung lassen sich keinerlei Hinweise darauf entnehmen, dass die betreffende Vorrichtung und das betreffende Verfahren im Rahmen einer Beschichtungsanlage, insbesondere einer Lackieranlage, zur Lösung der vorstehend beschriebenen komplexen Probleme betrieben werden könnten.

Aufgabe der vorliegenden Erfindung ist es, eine neue Beschichtungsanlage, insbesondere Lackieranlage, bereitzustellen, die mindestens eine Vorbehandlungsanlage umfasst und die die Nachteile des Standes der Technik nicht mehr länger aufweist, sondern die Beschichtungen, insbesondere Beschichtungen von besonders hoher Qualität, speziell Automobilserienlackierungen, liefert, die von Beschichtungsfehlern vollständig oder nahezu vollständig frei sind.

Außerdem ist es die Aufgabe der vorliegenden Erfindung, ein neues Verfahren zur Entkeimung einer Vorbehandlungsanlage für eine Beschichtungsanlage, insbesondere Lackieranlage, zu finden, das die Nachteile des Standes der Technik nicht mehr länger aufweist, sondern das insbesondere die Bildung von Biofilmen in dem VEW, das in der Vorbehandlungsanlage, insbesondere in der Aktivierungszone und der Spülzone, eingesetzt wird, wirksam verhindert. Das neue Verfahren soll aber nicht nur die Bildungen von Biofilmen verhindern, sondern bereits gebildete und/oder von den Wänden wieder abgelöste Biofilme wirksam beseitigen, so dass es zu keinen unerwünschten Niederschlägen auf den Substraten mehr kommen kann. Dies soll auch bei Temperaturen des VEW von 30 bis 45°C, langen Beckenstandzeiten und/oder Verschmutzungen durch Phosphate gewährleistet sein. Darüber hinaus soll das neue Verfahren nicht nur für eine kurze Zeit wirken, sondern eine Langzeitwirkung entfalten. Nicht zuletzt soll durch das neue Verfahren verhindert werden, dass Desinfektionsmittel in andere Teile der Beschichtungsanlage, insbesondere Lackieranlage, eingeschleppt werden und dort die Beschichtungsstoffe schädigen.

Dem gemäß wurde die neue Beschichtungsanlage, umfassend mindestens eine Vorrichtung zur Vorbehandlung der zu beschichtenden Substrate (Vorbehandlungsanlage), mindestens eine Vorrichtung zum Beschichten der Substrate mit Beschichtungsstoffen (Beschichtungsvorrichtung) und mindestens eine Vorrichtung zum Trocknen und Härten der applizierten Beschichtungsstoffe (Härtungsvorrichtung), gefunden, worin mindestens eine der Vorbehandlungsanlagen mindestens eine Anordnung zur anodischen Oxidation des in der Vorbehandlungsanlage eingesetzten deionisierten, d. h. vollentsalzten, Wassers (VEW) mit mindestens einer Elektrode umfasst, wobei die Elektrode eine Schicht aus Diamant auf einem Grundkörper aufweist.

Im Folgenden wird die neue Beschichtungsanlage als »erfindungsgemäße Anlage« bezeichnet.

Außerdem wurde das neue Verfahren zur Entkeimung einer Vorbehandlungsanlage in einer Beschichtungsanlage wie oben gefunden, bei dem das in der Vorbehandlungsanlage eingesetzte VEW mit Hilfe mindestens einer Elektrode, die eine Schicht aus Diamant auf einem Grundkörper aufweist, anodisch oxidiert, wobei die Spannung an der Elektrode während des Betriebs ständig unterhalb des Potenzialbereichs liegt, bei dem eine Sauerstoffentwicklung an der Elektrode erfolgt.

Das neue Verfahren dient zur Entkeimung einer Vorbehandlungsanlage für eine Beschichtungsanlage und wird als »erfindungsgemäßes Verfahren« bezeichnet.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Anlage und des erfindungsgemäßen Verfahrens gelöst werden konnte.

Insbesondere war es überraschend, dass die erfindungsgemäße Anlage die Nachteile des Standes der Technik nicht mehr länger aufwies, sondern die Herstellung von Beschichtungen, insbesondere von Beschichtungen von besonders hoher Qualität, speziell Automobilserienlackierungen, gestattete, die von Beschichtungsfehlern vollständig oder nahezu vollständig frei waren.

Dabei bedeutet »nahezu vollständig frei von Beschichtungsfehlern«, dass die betreffenden Automobilserienlackierungen nur eine sehr geringe Anzahl von Beschichtungsfehlern aufwiesen, die die technologischen Eigenschaften und den optischen Gesamteindruck der Automobilserienlackierungen nicht nachteilig beeinflussten.

Vor allem aber war es überraschend, dass das erfindungsgemäße Verfahren ebenfalls die Nachteile des Standes der Technik nicht mehr länger aufwies, sondern insbesondere die Bildung von Biofilmen in dem VEW, das in der erfindungsgemäßen Vorbehandlungsanlage, insbesondere in der Aktivierungszone und der Sperrzone, eingesetzt wurde, wirksam verhinderte. Das erfindungsgemäße Verfahren erfüllte aber nicht nur diese Funktion, sondern beseitigte wirksam bereits gebildete und/oder von den Wänden wieder abgelöste Biofilme, sodass es zu keinen unerwünschten Ablagerungen auf den vorbehandelten Substraten mehr kam. Dies war auch bei Temperaturen des VEW von 30 bis 45°C, langen Beckenstandzeiten und/oder Verschmutzungen durch Phosphate gewährleistet. Darüber hinaus war das erfindungsgemäße Verfahren nicht nur für eine kurze Zeit wirksam, sondern entfaltete eine Langzeitwirkung. Nicht zuletzt konnte durch das erfindungsgemäße Verfahren von vornherein verhindert werden, dass Desinfektionsmittel in andere Teile der Beschichtungsanlage, insbesondere Lackieranlage, eingeschleppt wurden und dort die Beschichtungsstoffe schädigten.

Die erfindungsgemäße Anlage umfasst mindestens drei Vorrichtungen, die der Durchführung der drei grundlegenden Prozessschritte der Beschichtungstechnologie
1. Vorbehandeln,
2. Lackieren und
3. Trocknen und Härten
dienen (vgl. hierzu beispielsweise A. Goldschmidt und H.-J Streitberger, BASF Handbuch Lackiertechnik, BASF Coatings AG, Vincentz Verlag, Hannover, 2002, »4. Lackiertechnologie«, Seite 453, Abb. 4.1 »Prozessschritte einer Lackieranlage«). Insbesondere handelt es sich bei der erfindungsgemäßen Anlage um eine Lackieranlage für die Automobilserienlackierung.

Lackieranlagen dieser Art umfassen Vorbehandlungsanlagen, die insbesondere der Vorreinigung, dem Spülen, dem Phosphatieren, dem Passivieren und dem Nachspülen der zu beschichtenden Substrate, insbesondere der Automobilkarosserien, dienen. Der Vorbehandlungsanlage schließen sich im Allgemeinen Vorrichtungen zur Elektrotauchlackierung, Vorrichtungen zur Applikation von Nahtabdichtungen und Unterbodenschutz, Füllern und Decklacken, insbesondere Basislacken und Klarlacken, sowie Vorrichtungen zum Trocknen und Härten der betreffenden applizierten Schichten an, die im Rahmen der vorliegenden Erfindung zusammenfassend als Beschichtungsvorrichtung bezeichnet werden (vgl. hierzu beispielsweise A. Goldschmidt und H.-J Streitberger, BASF Handbuch Lackiertechnik, BASF Coatings AG, Vincentz Verlag, Hannover, 2002, »7.1 Automobilserienlackierung«, Seiten 714 bis 737, insbesondere Seite 717, Abb. 7.1.5 »Typische Prozessschritte einer Lackieranlage in der Automobilindustrie« und »7.1.1 Vorbehandlung«, Seiten 718 bis 721, i. V. m. »4.1.2.3 Vorbehandlungen«, Seiten 470 bis 481).

Erfindungsgemäß enthält mindestens eine der Vorbehandlungsanlagen, insbesondere alle Vorbehandlungsanlagen, der erfindungsgemäßen Anlage mindestens eine Anordnung, vorzugsweise mindestens zwei Anordnungen, zur anodischen Oxidation des in der Vorbehandlungsanlage eingesetzten deionisierten, d. h. vollentsalzten Wassers (nachfolgend der Kürze halber als »VEW« bezeichnet).

Die erfindungsgemäß zu verwendende Anordnung zur anodische Oxidation des in der Vorbehandlungsanlage eingesetzten VEW (nachfolgend der Kürze halber »Anordnung« genannt) umfasst mindestens eine Elektrode, die eine Schicht (3), insbesondere eine großflächige Schicht (3), aus Diamant auf einem Grundkörper (1,2) aufweist.

Vorzugsweise hat die Schicht (3) aus Diamant eine Stärke von 2 bis 50 Mikrometer.

Bevorzugt ist die Schicht (3) dotiert. Besonders bevorzugt wird Bor als Dotierungsmittel verwendet. Ganz besonders bevorzugt liegt die Dotierung mit Bor im Bereich zwischen 10 ppm und 10.000 ppm.

Vorzugsweise weist der Grundkörper (1,2) unterhalb der Schicht (3) aus Diamant ein selbst passivierendes Metall, insbesondere Titan, Niob, Tantal, Zirkon, Wolfram oder eine Legierung mit mindestens einem der Metalle, Silicium, Siliciumcarbid, siliciumfiltriertes Siliciumcarbid oder siliciumbasierte Keramiken auf.

Bevorzugt ist zwischen dem Grundkörper (1,2) und der Schicht (3) aus Diamant eine haftvermittelnde und während der Elektrolyse oxidationsstabile Zwischenschicht (4), insbesondere eine Metallcarbidschicht, angeordnet.

Besonders bevorzugt besitzt der Grundkörper (1,2) einen Kern (1) aus einem leitfähigen Material, der von einer Hülle (2) aus dem selbstpassivierenden Metall umgeben ist.

Ganz besonders bevorzugt ist der Grundkörper (1,2) als Streckmetall ausgebildet.

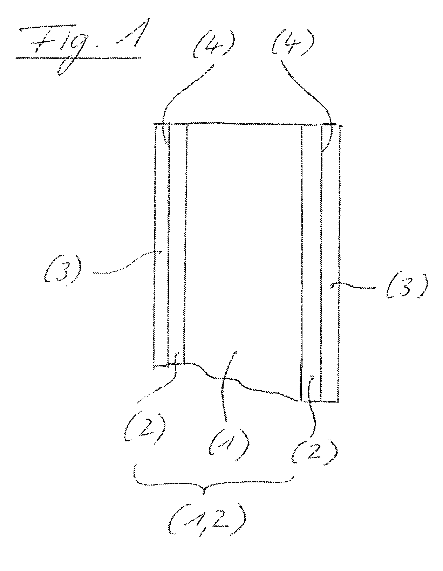

Die erfindungsgemäß zu verwendende Elektrode wird durch die Figur 1 schematisch veranschaulicht, d. h. die Größenverhältnisse sind nicht maßstabsgetreu. In der Figur 1 haben die Bezugszeichen die folgende Bedeutung:
(1,2) Grundkörper,
   (1) Kern,
   (2) Hülle,
   (3) Schicht aus Diamant und
   (4) Zwischenschicht.

Vorzugsweise ist die Anordnung mit der Aktivierungszone oder der Spülzone, besonders bevorzugt der Aktivierungszone und der Spülzone, der Vorbehandlungsanlage verbunden. Ganz besonders bevorzugt ist die Verbindung oder sind die Verbindungen derart ausgestaltet, dass das VEW im Kreis durch die Anordnung geführt werden kann.

Die Anordnung kann des weiteren übliche und bekannte, elektronische, mechanische und pneumatische Vorrichtungen, wie Pumpen für den Transport des VEW durch die Anordnung und die Leitungen, elektronische, mechanische und pneumatische Mess- und Regelvorrichtungen, insbesondere zur Messung der Konzentration der an den Elektroden durch anodische Oxidation erzeugten reaktiven Spezies und der Einstellung des Elektrodenpotenzials, sowie eine elektronische Datenverarbeitungsanlage zur Erfassung und Integration von Messwerten und zur Regelung der Anordnung umfassen.

Die erfindungsgemäße Anlage dient der Durchführung des erfindungsgemäßen Verfahrens.

Bei dem erfindungsgemäßen Verfahren wird das in der Vorbehandlungsanlage eingesetzte VEW vorzugsweise in mindestens einer der vorstehend beschriebenen Anordnungen mit Hilfe mindestens einer der vorstehend beschriebenen Elektroden anodisch oxidiert, wobei die Spannung an der Elektrode während des Betriebs ständig unterhalb des Potenzialbereichs liegt, bei dem eine größere Sauerstoffentwicklung an der Elektrode erfolgt. Vorzugsweise liegt die Spannung an der Elektrode während des Betriebs gerade in dem Potenzialbereich, bei dem eine Sauerstoffentwicklung beginnt.

Bevorzugt wird die Elektrode vor ihrer ersten Inbetriebnahme nicht vorpolarisiert.

Besonders bevorzugt wird die Elektrode durch eine Vorbehandlung mit einer Ladung von 0,01 bis 1 C/cm² Elektrodenoberfläche vor der ersten Inbetriebnahme in dem Potenzialbereich versehen.

Ganz besonders bevorzugt wird bei dem erfindungsgemäße Verfahren das VEW im Kreis an mindestens einer Elektrode vorbeigeführt.

Die erfindungsgemäß zu verwendenden Elektroden, ihre Herstellung und die Bedingungen, unter denen sie eingesetzt werden, sind beispielsweise aus der europäischen Patentanmeldung EP 0 994 074 A2, Seite 2, Absatz [0010], bis Seite 7, Absatz [0091], im Detail bekannt.

In einer bevorzugten Ausführungsform umfasst die erfindungsgemäße Anlage mindestens eine Vorrichtung, die der Ableitung und Aufarbeitung von wässrigen Medien aus der erfindungsgemäßen Anlage dient.

Dabei kann die Vorrichtung zur Ableitung und Aufarbeitung von wässrigen Medien aus der erfindungsgemäßen Anlage der Ableitung und Aufarbeitung der Abwässer aus der Vorbehandlungsanlage dienen.

Die Vorrichtung zur Ableitung und Aufarbeitung von wässrigen Medien aus der erfindungsgemäßen Anlage kann aber auch der Ableitung von überschüssigen wässrigen Beschichtungsstoffen, insbesondere Overspray, aus der Beschichtungsvorrichtung und der Abtrennung der Festkörper der wässrigen Beschichtungsstoffe von ihren wässrigen Phasen dienen. Bevorzugt umfasst die Vorrichtung zur Abführung und Aufarbeitung von überschüssigen wässrigen Beschichtungsstoffen aus der Beschichtungsvorrichtung mindestens eine Ultrafiltrationsvorrichtung, worin die Festkörper der wässrigen Beschichtungsstoffe von ihren wässrigen Phasen getrennt werden.

Des Weiteren kann die Vorrichtung zur Abführung und Aufarbeitung von wässrigen Medien aus der erfindungsgemäßen Anlage der Ableitung und Aufarbeitung von wässrigen Medien aus der Härtungsvorrichtung dienen.

Besonders bevorzugt umfasst die erfindungsgemäße Anlage alle drei der vorstehend beschriebenen Vorrichtungen zur Abführung und Aufarbeitung von wässrigen Medien aus der erfindungsgemäßen Anlage.

Besonders bevorzugt ist mindestens einer der vorstehend beschriebenen Vorrichtungen zur Abführung und Aufarbeitung von wässrigen Medien aus der erfindungsgemäßen Anlage, insbesondere alle Vorrichtungen, jeweils mit mindestens einer Anordnung zur anodischen Oxidation der Abwässer aus der Vorbehandlungsanlage, der abgetrennten wässrigen Phasen der überschüssigen wässrigen Beschichtungsstoffe aus der Beschichtungsvorrichtung und/oder der wässrigen Medien aus der Härtungsvorrichtung verbunden, wobei jede Anordnung mindestens eine Elektrode umfasst, die eine Schicht (3) aus Diamant auf einem Grundkörper (1,2) aufweist. Ganz besonders bevorzugt werden die vorstehend beschriebenen Anordnungen zur anodischen Oxidation verwendet. Insbesondere wird die anodische Oxidation in jeder Anordnung dem erfindungsgemäßen Verfahren entsprechend durchgeführt.

Die erfindungsgemäße Anlage, insbesondere die erfindungsgemäße Lackieranlage zur Herstellung von Automobilserienlackierungen, liefert Beschichtungen, insbesondere Automobilserienlackierungen, von besonders hoher Qualität. Insbesondere sind die Automobilserienlackierungen vollständig oder nahezu vollständig frei von Beschichtungsfehlern, sodass eine aufwändige Nachbehandlung der lackierten Karosserien nicht oder nur in sehr geringem Umfang notwendig ist. Die Qualität der Automobilserienlackierungen ist so hoch, dass sie sich hervorragend für die Lackierung von besonders hochwertigen Automobilen der Oberklasse eignet.

Das erfindungsgemäße Verfahren verhindert dabei wirksam die Bildung von Biofilmen in dem VEW, das in der Vorbehandlungsanlage der erfindungsgemäßen Beschichtungsanlage eingesetzt wird. Aber es verhindert nicht nur wirksam die Bildung der Biofilmen, sondern beseitigt bereits gebildete und/oder von den Wänden wieder abgelöste Biofilme wirksam, sodass es zu keinen unerwünschten Ablagerungen auf den Substraten mehr kommen kann. Dies ist auch bei Temperaturen des VEW von 30 bis 45°C, langen Beckenstandzeiten und/oder Verschmutzungen durch Phosphate nicht nur für eine kurze Zeit, sondern auch für einen längeren Zeitraum gewährleistet. Das erfindungsgemäße Verfahren verhindert auch, dass Desinfektionsmittel in andere Teile der Lackieranlage eingeschleppt werden und dort die Beschichtungsstoffe verändern, insbesondere schädigen.

In der oben beschriebenen bevorzugten Ausführungsform zeigt die erfindungsgemäße Anlage nicht nur die vorstehend beschriebenen besonderen Vorteile, sondern kann besonders wirtschaftlich und umweltverträglich betrieben werden.

## Patentansprüche

1. Beschichtungsanlage, umfassend mindestens eine Vorrichtung zur Vorbehandlung der zu beschichtenden Substrate (Vorbehandlungsanlage), mindestens eine Vorrichtung zum Beschichten der Substrate mit Beschichtungsstoffen (Beschichtungsvorrichtung) und mindestens eine Vorrichtung zum Trocknen und Härten der applizierten Beschichtungsstoffe (Härtungsvorrichtung), **dadurch gekennzeichnet, dass** mindestens eine der Vorbehandlungsanlagen mindestens eine Anordnung zur anodischen Oxidation des in der Vorbehandlungsanlage eingesetzten deionisierten, d. h. vollentsalzten Wassers (VEW) mit mindestens einer Elektrode umfasst, wobei die Elektrode eine Schicht (3) aus Diamant auf einem Grundkörper (1,2) aufweist.

2. Beschichtungsanlage nach Anspruch 1, **dadurch gekennzeichnet, dass** die Elektrode eine großflächige Schicht (3) aus dotiertem Diamant auf einem Grundkörper (1,2) aufweist.

3. Beschichtungsanlage nach Anspruch 1 oder 2, **dadurch gekennzeichnet, dass** die Schicht (3) aus Diamant eine Stärke von 2 bis 50 µm hat.

4. Beschichtungsanlage nach Anspruch 2 oder 3, **dadurch gekennzeichnet, dass** die Dotierung der Schicht (3) aus Diamant mit Bor in dem Bereich zwischen 10 ppm und 10.000 ppm liegt.

5. Beschichtungsanlage nach einem der Ansprüche 1 bis 4, **dadurch gekennzeichnet, dass** der Grundkörper (1,2) unterhalb der Schicht (3) aus Diamant ein selbst passivierendes Metall, insbesondere Titan, Niob, Tantal, Zirkon, Wolfram oder eine Legierung mit mindestens einem dieser Metalle, mit Silicium, Siliciumcarbid, siliciumfiltriertes Siliciumcarbid oder siliciumbasierten Keramiken aufweist.

6. Beschichtungsanlage nach Anspruch 5, **dadurch gekennzeichnet, dass** zwischen dem Grundkörper (1,2) und der Schicht (3) aus Diamant eine haftvermittelnde und während der Elektrolyse oxidationsstabile Zwischenschicht (4), insbesondere eine Metallcarbidschicht angeordnet ist.

7. Beschichtungsanlage nach einem der Ansprüche 1 bis 6, **dadurch gekennzeichnet, dass** der Grundkörper (1,2) einen Kern (1) aus einem leitfähigen Material besitzt, der von einer Hülle (2) aus dem selbstpassivierenden Metall umgeben ist.

8. Beschichtungsanlage nach einem der Ansprüche 1 bis 7, **dadurch gekennzeichnet, dass** der Grundkörper (1,2) als Streckmetall ausgebildet ist.

9. Beschichtungsanlage nach einem der Ansprüche 1 bis 8, **dadurch gekennzeichnet, dass** die Anordnung zur anodischen Oxidation des in der Vorbehandlungsanlage eingesetzten VEW mit der Aktivierungszone der Vorbehandlungsanlage verbunden ist, so dass das VEW im Kreis durch die Anordnung geführt werden kann.

10. Beschichtungsanlage nach einem der Ansprüche 1 bis 9, **dadurch gekennzeichnet, dass** die Anordnung zur anodischen Oxidation des in der Vorbehandlungsanlage eingesetzten VEW mit der Spülzone der Vorbehandlungsanlage verbunden ist, so dass das VEW im Kreis durch die Anordnung geführt werden kann.

11. Beschichtungsanlage nach einem der Ansprüche 1 bis 10, **dadurch gekennzeichnet, dass** die Beschichtungsanlage mindestens eine Vorrichtung umfasst, die der Ableitung und Aufarbeitung der Abwässer aus der Vorbehandlungsanlage dient.

12. Beschichtungsanlagen nach Anspruch 11, **dadurch gekennzeichnet, dass** die Vorrichtung zur Ableitung und Aufarbeitung von wässrigen Medien aus der Beschichtungsanlage der Ableitung von überschüssigen wässrigen Beschichtungsstoffen aus der Beschichtungsvorrichtung und der Abtrennung der Festkörper der wässrigen Beschichtungsstoffe von ihren wässrigen Phasen dient.

13. Beschichtungsanlage nach Anspruch 12, **dadurch gekennzeichnet, dass** die Vorrichtung zur Abführung und Aufarbeitung von überschüssigen wässrigen Beschichtungsstoffen aus der Beschichtungsvorrichtung mindestens eine Ultrafiltrationsvorrichtung umfasst, worin die Festkörper der wässrigen Beschichtungsstoffe von ihren wässrigen Phasen getrennt werden.

14. Beschichtungsanlage nach Anspruch 11, **dadurch gekennzeichnet, dass** die Vorrichtung zur Abführung und Aufarbeitung von wässrigen Medien aus der Beschichtungsanlage der Ableitung und Aufarbeitung von wässrigen Medien aus der Härtungsvorrichtung dient.

15. Beschichtungsanlage nach einem der Ansprüche 11 bis 14, **dadurch gekennzeichnet, dass** die Vorrichtung zur Abführung und Aufarbeitung von wässrigen Medien aus der Beschichtungsanlage mit mindestens einer Anordnung zur anodischen Oxidation der Abwässer
aus der Vorbehandlungsanlage,
aus der abgetrennten wässrigen Phase der überschüssigen wässrigen Beschichtungsstoffe,
aus der Beschichtungsvorrichtung und/oder
aus den wässrigen Medien aus der Härtungsvorrichtung
verbunden ist, so dass das VEW im Kreis durch die Anordnung geführt werden kann,
wobei die Anordnung mindestens eine Elektrode umfasst, die eine Schicht (3) aus Diamant auf einem Grundkörper (1,2) aufweist.

16. Verfahren zur Entkeimung einer Vorbehandlungsanlage in einer Beschichtungsanlage gemäß einem der Ansprüche 1 bis 15, bei dem man das in der Vorbehandlungsanlage eingesetzte VEW mit Hilfe mindestens einer Elektrode, die eine Schicht (3) aus Diamant auf einem Grundkörper (1,2) aufweist, anodisch oxidiert, wobei die Spannung an der Elektrode während des Betriebs ständig unterhalb des Potenzialbereichs liegt, bei dem eine Sauerstoffentwicklung an der Elektrode erfolgt.

17. Verfahren nach Anspruch 16, **dadurch gekennzeichnet, dass** die Spannung an der Elektrode während des Betriebs gerade in dem Potenzialbereich liegt, bei dem eine Sauerstoffentwicklung beginnt.

18. Verfahren nach Anspruch 16 oder 17, **dadurch gekennzeichnet, dass** die Elektrode nicht vorpolarisiert wird.

19. Verfahren nach einem der Ansprüche 16 bis 18, **dadurch gekennzeichnet, dass** die Elektrode durch eine Vorbehandlung mit einer Ladung von 0,01 bis 1 Coulomb/cm² Elektrodenoberfläche vor der ersten Inbetriebnahme versehen wird.

20. Verfahren nach einem der Ansprüche 16 bis 19, **dadurch gekennzeichnet, dass** das VEW im Kreislauf an mindestens einer Elektrode vorbeigeführt wird.

## Claims

1. Coating installation, comprising at least one apparatus for pretreating the substrates to be coated (pretreatment installation), at least one apparatus for coating the substrate with coating substances (coating apparatus), and at least one apparatus for drying and hardening the applied coating substances (hardening apparatus), **characterized in that** at least one of the pretreatment installations comprises at least one arrangement for the anodic oxidation of the deionized, i.e. fully de-mineralized, water used in the pretreatment installation with at least one electrode, the electrode having a layer (3) of diamond, on a base body (1, 2).

2. Coating installation, according to Claim 1, **characterized in that** the electrode has a large-area layer (3) of doped diamond on a base body (1, 2).

3. Coating installation, according to Claim 1 or 2, **characterized in that** the layer (3) of diamond is from 2 to 50 µm thick.

4. Coating installation, according to Claim 2 or 3, **characterized in that** the doping of the layer (3) of diamond with boron amounts to between 10 ppm and 10 000 ppm.

5. Coating installation, according to any of Claims 1 to 4, **characterized in that** the base body (1, 2), beneath the layer (3) of diamond, comprises a self-passivating metal, in particular titanium, niobium, tantalum, zirconium, tungsten or an alloy comprising at least one of these metals, with silicon, silicon carbide, silicon-infiltrated silicon carbide, or silicon-based ceramics.

6. Coating installation, according to Claim 5, **characterized in that** a bonding intermediate layer (4) which is oxidation-stable during the electrolysis, in particular a metal carbide layer, is arranged between the base body (1, 2) and the layer (3) of diamond.

7. Coating installation, according to any of Claims 1 to 6, **characterized in that** the base body (1, 2) has a core (1) of a conductive material, which is surrounded by a sheath (2) of the self-passivating metal.

8. Coating installation, according to any of Claims 1 to 7, **characterized in that** the base body (1, 2) is formed from expanded metal.

9. Coating installation, according to any of Claims 1 to 8, **characterized in that** the arrangement for the anodic oxidation of the deionized water used in the pretreatment installation is connected to the activation zone of the pretreatment installation so that the deionized water can be circulated through the arrangement.

10. Coating installation, according to any of Claims 1 to 9, **characterized in that** the arrangement for the anodic oxidation of the deionized water used in the pretreatment installation is connected to the rinsing zone of the pretreatment installation so that the deionized water can be circulated through the arrangement.

11. Coating installation, according to any of Claims 1 to 10, **characterized in that** it comprises at least one apparatus used to discharge and work up the waste waters from the pretreatment installation.

12. Coating installation, according to Claim 11, **characterized in that** the apparatus for discharging and working up aqueous media from the coating installation is used to discharge excess aqueous coating substances from the coating apparatus and to separate the solids of the aqueous coating substances from their aqueous phases.

13. Coating installation, according to Claim 12, **characterized in that** the apparatus for discharging and working up excess aqueous coating substances from the coating apparatus comprises at least one ultrafiltration apparatus, in which the solids of the aqueous coating substances are separated from their aqueous phases.

14. Coating installation, according to Claim 11, **characterized in that** the apparatus for discharging and working up aqueous media from the coating installation is used to discharge and work up aqueous media from the hardening apparatus.

15. Coating installation, according to one of Claims 11 to 14, **characterized in that** the apparatus for discharging and working up aqueous media from the coating installation is connected to at least one arrangement for the anodic oxidation of the waste waters
from the pretreatment installation,
from the separated-off aqueous phases of the excess aqueous coating substances,
from the coating apparatus and/or
from the aqueous media from the hardening apparatus,
so that the deionized water can be circulated through the arrangement,
the arrangement comprising at least one electrode which has a layer (3) of diamond on a base body (1, 2).

16. Method for sterilizing a pretreatment installation in a coating installation according to any of Claims 1 to 15, in which the deionized water used in the pretreatment installation is anodically oxidized with the aid of at least one electrode, which has a layer (3) of diamond on a base body (1, 2), the voltage at the electrode during operation always being below the potential range at which oxygen is evolved at the electrode.

17. Method according to Claim 16, **characterized in that** the voltage at the electrode during operation is precisely within the potential range at which evolution of oxygen commences.

18. Method according to Claim 16 or 17, **characterized in that** the electrode is not pre-polarized.

19. Method according to any of Claims 16 to 18, **characterized in that** the electrode, prior to initial operation, is provided with a charge of from 0.01 to 1 Coulomb/cm² of electrode surface area by a pretreatment.

20. Method according to any of Claims 16 to 19, **characterized in that** the deionized water is circulated past at least one electrode.

## Revendications

1. Installation de revêtement qui comprend au moins un dispositif de prétraitement des supports à revêtir (installation de prétraitement), au moins un dispositif de revêtement des supports par des matières de revêtement (dispositif de revêtement) et au moins un dispositif de séchage et de durcissement de la substance de revêtement qui a été appliquée (dispositif de durcissement), **caractérisée en ce qu'**au moins une des installations de prétraitement présente au moins un système d'oxydation anodique de l'eau déminéralisée, à savoir entièrement débarrassée de ses sels (VEW) utilisée dans l'installation de prétraitement qui est doté d'au moins une électrode, les électrodes présentant une couche (3) en diamant placée sur un corps de base (1, 2).

2. Installation de revêtement selon la revendication 1, **caractérisée en ce que** l'électrode présente une couche (3) de grande surface en diamant dopé placée sur un corps de base (1, 2).

3. Installation de revêtement selon les revendications 1 ou 2, **caractérisée en ce que** la couche (3) en diamant a une épaisseur de 2 à 50 µm.

4. Installation de revêtement selon les revendications 2 ou 3, **caractérisée en ce que** le dopage de la couche (3) en diamant par du bore est compris dans la plage de 10 ppm à 10 000 ppm.

5. Installation de revêtement selon l'une des revendications 1 à 4, **caractérisée en ce que** le corps de base (1, 2) présente en dessous de la couche (3) en diamant un métal auto-passivant, en particulier en titane, niobium, tantale, zirconium, tungstène ou en un alliage qui comprend au moins un de ces métaux et avec le silicium, le carbure de silicium, le carbure de silicium à silicium filtré ou des céramiques à base de silicium.

6. Installation de revêtement selon la revendication 5, **caractérisé en ce qu'**entre le corps de base (1, 2) et la couche (3) en diamant est disposée une couche intermédiaire de renforcement de l'adhérence et qui résiste à l'oxydation pendant l'électrolyse, en particulier une couche en carbure métallique.

7. Installation de revêtement selon l'une des revendications 1 à 7, **caractérisée en ce que** le corps de base (1, 2) possède une âme (1) en matériau conducteur entourée par une enveloppe (2) en un métal auto-passivant.

8. Installation de revêtement selon l'une des revendications 1 à 7, **caractérisée en ce que** le corps de base (1, 2) est réalisé en métal étiré.

9. Installation de revêtement selon l'une des revendications 1 à 8, **caractérisée en ce que** le système d'oxydation anodique de l'eau VEW utilisé dans l'installation de prétraitement est relié à la zone d'activation de l'installation de prétraitement de telle sorte que l'eau VEW puisse être mise en circulation dans le système.

10. Installation de revêtement selon l'une des revendications 1 à 9, **caractérisée en ce que** le système d'oxydation anodique de l'eau VEW utilisé dans l'installation de prétraitement est relié à la zone de lavage de l'installation de prétraitement de telle sorte que l'eau VEW puisse être mise en circulation dans le système.

11. Installation de revêtement selon l'une des revendications 1 à 10, **caractérisée en ce que** l'installation de revêtement comprend au moins un dispositif qui sert à évacuer et à traiter les eaux usées de l'installation de prétraitement.

12. Installation de revêtement selon la revendication 11, **caractérisée en ce que** le dispositif d'évacuation et de traitement des fluides aqueux qui sont produits par l'installation de revêtement sert à évacuer du dispositif de revêtement les substances aqueuses de revêtement en excès et à séparer de leur phase aqueuse les corps solides des substances aqueuses de revêtement.

13. Installation de revêtement selon la revendication 12, **caractérisée en ce que** le dispositif d'évacuation et de traitement des substances aqueuses de revêtement en excès produites par le dispositif de revêtement comprend au moins un dispositif d'ultrafiltration dans lequel les corps solides sont séparés de la phase aqueuse des substances aqueuses de revêtement.

14. Installation de revêtement selon la revendication 11, **caractérisée en ce que** le dispositif d'évacuation et de traitement des fluides aqueux produits par l'installation de revêtement sert à évacuer et à traiter les fluides aqueux produits par le dispositif de durcissement.

15. Installation de revêtement selon l'une des revendications 11 à 14, **caractérisée en ce que** le dispositif d'évacuation et de traitement des fluides aqueux produits par l'installation de revêtement est relié à au moins un système d'oxydation anodique des eaux usées produites par l'installation de prétraitement, par séparation de la phase aqueuse des substances aqueuses de revêtement en excès, par le dispositif de revêtement et/ou par les fluides aqueux produits par le dispositif de durcissement, de sorte que l'eau VEW puisse être mise en circulation dans le système,
le système comprenant au moins une électrode qui présente une couche (3) en diamant placée sur un corps de base (1, 2).

16. Procédé de stérilisation d'une installation de prétraitement d'une installation de revêtement selon l'une des revendications 1 à 15, dans lequel l'eau VEW utilisée dans l'installation de prétraitement est oxydée anodiquement au moyen d'au moins une électrode qui présente une couche (3) en diamant placée sur un corps de base (1, 2), la tension appliquée sur l'électrode en fonctionnement étant en permanence en dessous de la plage de potentiel dans laquelle de l'oxygène est dégagé à l'électrode.

17. Procédé selon la revendication 16, **caractérisé en ce que** la tension appliquée sur l'électrode en fonctionnement est située exactement dans la plage de potentiel dans laquelle le dégagement d'oxygène commence.

18. Procédé selon les revendications 16 ou 17, **caractérisé en ce que** l'électrode n'est pas prépolarisée.

19. Procédé selon l'une des revendications 16 à 18, **caractérisé en ce que** l'électrode est dotée par un prétraitement d'une charge de 0,01 à 1 Coulomb/cm² de surface d'électrode avant sa première mise en service.

20. Procédé selon l'une des revendications 16 à 19, **caractérisé en ce que** l'eau VEW qui circule en circuit fermé passe sur au moins une électrode.
